# EUROPÄISCHE PATENTSCHRIFT

(11) **EP 2 030 675 B1**
(45) Veröffentlichungstag und Bekanntmachung des Hinweises auf die Patenterteilung: **05.11.2014**
(21) Anmeldenummer: 08163448.7
(22) Anmeldetag: 02.09.2008
(51) Int. Cl.: B01F 7/02, B01F 7/16, C08L 83/04

(54) **Verfahren zur kontinuierlichen Herstellung von vernetzbaren Massen auf Basis von Organosiliciumverbindungen**
Process for the continuous preparation of crosslinkable materials based on organosilicon compounds
Procédé pour la fabrication en continu de matériaux durcissables à base de compositions de organosilicones

(30) Priorität: 03.09.2007 DE 102007041857
(43) Veröffentlichungstag der Anmeldung: 04.03.2009
(73) Patentinhaber: Wacker Chemie AG, 81737 München (DE)
(72) Erfinder: Schöley, Peter, 01665 Diera-Zehren (DE); Scheim, Uwe, 01640 Coswig (DE)
(74) Vertreter: Budczinski, Angelika

(56) Entgegenhaltungen:
- EP-A- 0 688 598
- EP-A- 0 739 652
- EP-A- 1 008 613
- EP-A- 1 210 973
- US-A- 6 019 498

## Beschreibung

Die Erfindung betrifft ein Verfahren zur kontinuierlichen Herstellung von Mischungen, insbesondere vernetzbaren Massen auf Basis von Organosiliciumverbindungen, das durch eine geringe mechanische Belastung des Mischgutes beim Vermischen von Organosilciumverbindungen und Feststoffen, insbesondere verstärkenden Füllstoffen, gekennzeichnet ist.

Vernetzbare Massen auf Basis von Organosiliciumverbindungen, die bei Ausschluss von Feuchtigkeit lagerfähig sind und unter Zutritt von Feuchtigkeit bei Raumtemperatur vernetzen, so genannte RTV1-Dichtmassen, sind bereits seit langem bekannt. Sie enthalten hauptsächlich Organosilciumverbindungen mit hydrolysierbaren Gruppen und verstärkenden Füllstoffen, wie hochdisperse Kieselsäuren. Diese Produkte werden in großen Mengen in der Bauindustrie als Verfugungs- und Dichtmaterial eingesetzt, wo sie neben einer guten Haftung auf verschiedenen Untergründen vor allem zwei Eigenschaften aufweisen müssen. Dies ist zum einen ein hoher Widerstand gegen Verformung bei der Anwendung im nicht ausgehärteten Zustand und zum anderen ein geringer Widerstand gegen Zugbeanspruchung im ausgehärteten Zustand. Der Widerstand gegen Verformung bei der Anwendung, also insbesondere der Widerstand beim Glättprozess des Verfugens, wird vom Anwender auch als "body" bezeichnet. Dieser "body" muss entsprechend den Anforderungen des Verfugers möglichst groß sein. Obwohl RTV1-Dichtmassen durch gute Standfestigkeiten gekennzeichnet sind, also bereits einen gewissen Widerstand gegen Verformung im nicht ausgehärteten Zustand aufweisen, wird vom Anwender in der Regel ein wesentlich größerer Widerstand gegen Verformung gewünscht. Der Widerstand der ausgehärteten RTV1-Dichtmasse in der Fuge bei Zugbeanspruchung soll meist klein sein, denn dadurch wird abgesichert, dass die Kraftwirkung auf die Haftfläche der Dichtmasse zum Untergrund möglichst gering ist. Wäre der Widerstand bei Zugbeanspruchung groß, dann würden starke Kräfte auf die Haftflächen der RTV1-Dichtmasse wirken, beispielsweise wenn sich Bauwerksfugen durch Abkühlung von Bauteilen vergrößern. Ein Abriss der Dichtmasse vom Untergrund wäre dann sehr schnell möglich und die abgedichtete Fuge würde ihre Funktion nicht mehr erfüllen.

Die beiden beschriebenen Eigenschaften können zwar jeweils sehr gut über den Gehalt an verstärkendem Füllstoff in der RTV1-Dichtmasse eingestellt werden. Während aber der Widerstand gegen Verformung im unausgehärteten Zustand hohe Anteile an verstärkendem Füllstoff in der RTV1-Dichtmasse erfordert, werden für die Erzielung niedriger Zugspannungswerte der ausgehärteten RTV1-Dichtmasse geringe Mengen von verstärkendem Füllstoff benötigt. Eine obere Grenze für Zugspannungswerte ergibt sich beispielsweise aus der Norm ISO 11600 Klasse 25 LM. Diese fordert einen Zugspannungswert bei 100 Prozent Dehnung (Modul) eines so genannten H-Prüfkörpers von maximalen 0,4 MPa. Die Einhaltung dieser Norm gelingt nur, wenn der Anteil an verstärkenden Füllstoffen in der RTV1-Dichtmasse möglichst gering gehalten wird. Höhere Anteile an verstärkenden Füllstoffen bewirken schnell eine drastische Steigerung des Moduls über die genannte Grenze hinaus. Eine ähnliche Norm zur Gewährleistung eines maximalen Widerstandes gegen Verformung beim Verfugen existiert bisher jedoch nicht. Die bekannten kontinuierlich hergestellten RTV1-Dichtmassen enthalten deshalb relativ geringe Anteile an verstärkenden Füllstoffen, denn diese geringen Anteile sichern die Einhaltung der oben beispielhaft genannten Norm für einen niedrigen Modul. Der vom Anwender nicht gewünschte Nachteil des geringen Widerstandes gegen Verformung bei der Anwendung wird im Allgemeinen in Kauf genommen.

Es gibt bereits zahlreiche Versuche, den Widerstand gegen Verformung beim Verfugen zu erhöhen ohne dabei die Grenze für maximal zulässige Zugspannungswerte zu überschreiten. Doch diese Lösungen beeinflussten sehr häufig andere Eigenschaften der RTV1-Dichtmasse nachteilig. So besteht eine Möglichkeit grundsätzlich in der Verwendung hoher Polymerviskositäten. Dies würde sowohl den Widerstand gegen Verformung beim Verfugen erhöhen als auch einen geringen Zugspannungswert bei Zugbeanspruchung ermöglichen. Dem sind jedoch dadurch Grenzen gesetzt, dass solche extrem hohen Polymerviskositäten technisch nicht mehr gehandhabt werden können. Außerdem würden die RTV1-Dichtmassen dann bei der Anwendung einen unerwünscht hohen Fadenzug aufweisen.

In EP-A1-857 750 wird vorgeschlagen, Polyalkylenoxide als Rheologieadditive mit einzumischen. Diese Additive verschlechtern jedoch sehr nachteilig die notwendige Haftung der RTV1-Dichtmasse auf verschiedenen Untergründen. Der Einsatzbereich der vernetzbaren Masse ist deshalb sehr eingeschränkt. Ein weiteres Problem stellen die bisher beschriebenen Verfahren zur kontinuierlichen Herstellung von RTV1-Dichtmassen dar. Trotz der relativ geringen Mengen der verstärkenden Füllstoffe, die in die Organosiliciumverbindung eingemischt werden müssen, ist die kontinuierliche Herstellung schwierig, denn es handelt sich dabei um pulverfömige Feststoffe und hochviskose Polymere, die sich sehr schlecht miteinander vermischen lassen.

Die Produktion von RTV-Massen erfolgt deshalb in Mischaggregaten mit sehr schnell drehenden Mischorganen. Durch die hohen Drehzahlen soll in kurzer Zeit sehr viel verstärkender Füllstoff in die Organosiliciumverbindung eingemischt werden. Anschließend werden die hohen Drehzahlen genutzt, um eine möglichst starke Dispergierung des verstärkenden Füllstoffes zu erreichen. In EP-A-1 008 613 wird beispielsweise eine Mischturbine beschrieben. Durch hohe Drehzahlen des Rotors und kleine Scherspalte zwischen Rotor und Wandung wird das Mischgut derart mechanisch beansprucht, dass die Temperatur der Mischung auf über 100°C ansteigt. EP-B-0 512 730 lehrt die Einarbeitung von hochdisperser Kieselsäure in Organopolysiloxane mit Hilfe eines Zweischneckenkneters. Auch hier kommt es zu einer starken Erwärmung des Mischgutes aufgrund der starken mechanischen Belastung während des Mischvorganges. Unabhängig von der mechanischen Belastung kann die Temperaturbelastung auch zu einer Schädigung der RTV-Massen führen. So kann beispielsweise die Lagerstabilität eingeschränkt sein.

EP-A-739 652 offenbart ein Verfahren zur kontinuierlichen Herstellung von Mischungen aus einer Organosiliciumverbindung und Feststoff nach dem Oberbegriff des Anspruchs 1.

Alle beschriebenen Verfahren zur Herstellung von RTV-Massen weisen in der Regel zusätzlich den erheblichen Nachteil auf, dass das extrem hochviskose Mischgut nach dem Vermischen technologisch sehr aufwändig wieder abgekühlt werden muss, damit es in feuchtigkeitsdichte Gebinde, wie Fässer, Kartuschen oder Schlauchbeutel, abgefüllt werden kann. Wäre das Mischgut zu warm, dann würde sich das Gebinde wegen des Volumenschwundes nach der Abkühlung der RTV1-Dichtmasse verformen.

Gegenstand der Erfindung ist ein Verfahren zur kontinuierlichen Herstellung von Mischungen enthaltend Organosiliciumverbindung (A) und Feststoff (B) sowie gegebenenfalls weitere Komponenten in einem Mischaggregat, das ein Gehäuse, dessen Innenwandung den Mischraum umschließt und mindestens ein darin angeordnetes, sich drehendes Mischorgan aufweist, wobei das Mischorgan aus mindestens einer rotierenden Mischwelle besteht, wobei mindestens eine Mischwelle einen Neigungswinkel zur Horizontalen von mehr als 10 Grad aufweist und die Einlassöffnung für den Feststoff (B) höher angeordnet ist als die Auslassöffnung, dadurch gekennzeichnet, dass der Quotient aus Länge der Mischwelle im Mischraum zum Durchmesser des maximalen Rotationsquerschnitts des gesamten Mischorgans größer als 1 ist.

Bei der erfindungsgemäß eingesetzten Organosiliciumverbindung (A) kann es sich um beliebige Organosiliciumverbindungen handeln, mit denen auch bisher Mischungen mit Feststoffen hergestellt worden sind, wie beispielsweise im Zusammenhang mit durch Kondensationsreaktion vernetzbaren Massen.

Es kann sich bei Komponente (A) sowohl um reine Siloxane handeln, also ≡Si-O-Si≡-Strukturen, als auch um Silcarbane, also ≡Si-R"-Si≡ -Strukturen mit R" gleich einem zweiwertigen, gegebenenfalls substituierten oder mit Heteroatomen unterbrochenen Kohlenwasserstoffrest oder beliebige Organosiliciumgruppen aufweisende Copolymere.

Bevorzugt handelt es sich bei den erfindungsgemäß eingesetzten Organosiliciumverbindungen (A) um solche enthaltend mindestens eine Einheit der Formel

RₐY_{b}SiX_{(4-a-b)/2} (I),

wobei
R gleich oder verschieden sein kann und gegebenenfalls substituierte Kohlenwasserstoffreste bedeutet,
Y gleich oder verschieden sein kann und Hydroxylgruppe oder hydrolysierbare Reste bedeutet,
X gleich oder verschieden sein kann und Sauerstoffatom oder einen zweiwertigen organischen Rest bedeutet,
a 0, 1, 2 oder 3, bevorzugt 1 oder 2, ist und
b 0, 1, 2 oder 3, bevorzugt 0, 1 oder 2, besonders bevorzugt 0, ist,
mit der Maßgabe, dass die Summe aus a+b kleiner oder gleich 3 ist.

Bevorzugt handelt es sich bei Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest. Es kann sich bei Rest R aber auch um zweiwertige Reste handeln, die z.B. zwei Silylgruppen miteinander verbinden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind substituierte Methylreste, Methoxyethyl-, Ethoxyethyl- und der Ethoxyethoxyethylrest oder Chlorpropyl- und Trifluorpropylrest.

Beispiele für zweiwertige Reste R sind der Ethylenrest, Polyisobutylendiylreste und propandiylterminierte Polypropylenglykolreste.

Bei den Gruppen Y kann es sich um Hydroxylreste und beliebige über Sauerstoffatom oder Stickstoffatom an Siliciumatom gebundene, gegebenenfalls substituierte Kohlenwasserstoffreste handeln.

Bevorzugt handelt es sich bei Rest Y um Hydroxylrest, Rest -OR¹, wie Methoxy-, Ethoxy-, n-Propoxy-, i-Propoxy-, n-Butoxy-, i-Butoxy-, s-Butoxy-, tert-Butoxy- und 2-Methoxyethoxyrest, wobei R¹ gegebenenfalls substituierte Kohlenwasserstoffreste bedeutet, Acyloxyreste, wie der Acetoxyrest, Aminoreste, wie Methylamino-, Dimethylamino-, Ethylamino-, Diethylamino- und Cyclohexylaminorest, Amidoreste, wie N-Methylacetamido- und Benzamidorest, Aminoxyreste, wie der Diethylaminoxyrest, Oximoreste, wie Metyhlethylketoximo- und Methylisobutylketoximorest, und Enoxyreste, wie der 2-Propenoxyrest.

Beispiele für Reste R¹ sind die für R angegebenen einwertigen Reste.

Bevorzugt handelt es sich bei Rest R¹ um Alkylreste mit 1 bis 12 Kohlenstoffatomen, besonders bevorzugt um den Methyl- oder Ethylrest.

Besonders bevorzugt handelt es sich bei Rest Y um Hydroxylrest, Rest -OR¹ mit R¹ gleich der oben genannten Bedeutung und Acyloxyreste, insbesondere um Acetoxy-, Methoxy- und Ethoxyreste.

Bevorzugt handelt es sich bei Rest X um Sauerstoffatom oder zweiwertige, SiC-gebundene, gegebenenfalls substituierte Kohlenwasserstoffreste, die mit Sauerstoffatomen unterbrochen sein können, insbesondere um Sauerstoffatom.

Beispiele für Rest X sind -O-, Methylen-, Ethylen-, Propylen- und α,ω-Bis(propylen)polypropylenoxidrest.

Besonders bevorzugt handelt es sich bei erfindungsgemäß eingesetzten Organosiliciumverbindungen (A) um solche ausgewählt aus der Gruppe bestehend aus Verbindungen der Formel

Y_{3-f}R_{f}Si-O- (SiR₂-O)_{c}(SiRY-O)_{d}-SiR_{f}Y_{3-f} (II)

und Verbindungen der Formel

Y_{3-f}R_{f}Si(CH₂)₁₋₃[NHCO]ₑ-O(CH₂CHR²-O-)g [CONH]ₑ(CH₂)₁₋₃SiR_{f}Y_{3-f} (III) ,

wobei
Rund Y jeweils gleich oder verschieden sein können und eine der oben angegebenen Bedeutungen haben,
R² gleich oder verschieden sein kann und Wasserstoffatom oder eine Methylgruppe ist,
c 0 oder eine ganze Zahl von 30 bis 3000, bevorzugt eine ganze Zahl von 30 bis 3000, ist,
d 0 oder eine ganze Zahl von 1 bis 20, bevorzugt 0 oder 1, ist, e gleich oder verschieden sein kann und 0 oder 1 ist,
g eine ganze Zahl von 30 bis 3000 ist und
f jeweils gleich oder verschieden sein kann und 0, 1 oder 2 ist.

Vorzugsweise ist f gleich 2, wenn Y gleich -OH ist, und f gleich 1 oder 0, wenn Y verschieden -OH ist.

Insbesondere handelt es sich bei Komponente (A) um Organopolysiloxane bestehend aus Einheiten der Formel (I), die ganz besonders bevorzugt pro Molekül mindestens zwei Reste Y aufweisen.

Die im erfindungsgemäßen Verfahren eingesetzte Komponente (A) ist unter Verfahrensbedingungen flüssig.

Bei den erfindungsgemäß eingesetzten Organosilciumverbindungen (A) handelt es sich bevorzugt um solche, die eine Viskosität von bevorzugt 30 bis 10 000 000 mPas, besonders bevorzugt 1 000 bis 5 000 000 mPas und ganz besonders bevorzugt 10 000 mPas bis 1 000 000 mPas aufweisen, jeweils gemessen bei 25°C.

Beispiele für Organosiliciumverbindungen (A) sind
(MeO)₂MeSiO[SiMe₂O]₃₀₋₂₀₀₀SiMe(OMe)₂,
(AcO)₂MeSiO[SiMe₂O]₃₀₋₂₀₀₀SiMe(OAc)₂
(HO)Me₂SiO[SiMe₂O]₃₀₋₂₀₀₀SiMe₂(OH),
(EtO)₂MeSiO[SiMe₂O]₃₀₋₂₀₀₀SiMe(OEt)₂,
(EtO)₂MorpholinomethylSiO[SiMe₂O]₃₀₋₂₀₀₀SiMorpholinomethyl(OEt)₂,
(EtO)₃SiO[SiMe₂O]₃₀₋₂₀₀₀SiMorpholinomethyl(OEt)₂,
(EtO)₂CyclohexylaminomethylSiO[SiMe₂O]₃₀₋₂₀₀₀SiCyclohexylaminomethyl(OEt)₂,
(MeO)₂ViSiO[SiMe₂O]₃₀₋₂₀₀₀SiVi(OMe)₂,
(MeO)₂MeSiO[SiMe₂O]₃₀₋₂₀₀₀SiVi(OMe)₂,
(AcO)₂ViSiO[SiMe₂O]₃₀₋₂₀₀₀SiVi(OAc)₂,
(AcO)₂EtSiO[SiMe₂O]₃₀₋₂₀₀₀SiEt(OAC)₂,
(Ox)₂MeSiO[SiMe₂O]₃₀₋₂₀₀₀SiMe(Ox)₂,
(Ox)₂ViSiO[SiMe₂O]₃₀₋₂₀₀₀SiVi(Ox)₂,
(Ox)₂MeSiO[SiMe₂O]₃₀₋₂₀₀₀SiVi(Ox)₂,
(Ox)₃SiO[SiMe₂O]₃₀₋₂₀₀₀Si(Ox)₃ und
(EtO)₂ViSiO[SiMe₂O]₃₀₋₂₀₀₀SiVi(OEt)₂,
wobei Me Methylrest, Et Ethylrest, Vi Vinylrest, Ac AcetoxyRest und Ox Ethylmethylketoximato-Rest bedeutet.

Weitere Beispiele für polymere Organosiliciumverbindungen (A) sind mindestens eine Gruppe der Formel (I) aufweisende organische Polymere, wie Polyisobutylen und Copolymere von Polyisobutylen mit Isopren; Polychloroprene; Polyisopren; Polyurethane; Polyester; Polyamide; Polyacrylate; Polymetacrylate; Vinylpolymer und Polycarbonate.

Bei den erfindungsgemäß eingesetzten polymeren Organosiliciumverbindungen (A) kann es sich um Homopolymere wie auch um Copolymere handeln, die jeweils linear oder verzweigt sein können.

Bei den Organosiliciumverbindungen (A) handelt es sich um handelsübliche Produkte bzw. können nach in der Siliciumchemie gängigen Methoden hergestellt werden.

Bei dem im erfindungsgemäßen Verfahren eingesetzten Feststoff (B) handelt es sich bevorzugt um pulverförmige Feststoffe, die oberflächenbehandelt sein und physikalisch und/oder chemisch gebundenes Wasser enthalten können. Besonders bevorzugt handelt es sich um solche Feststoffe, die fluidisierbar sind, d.h. solche, die ein Fließverhalten zeigen, das mit dem von Flüssigkeiten vergleichbar ist.

Der erfindungsgemäß eingesetzte Feststoff (B) hat eine BET-Oberfläche von bevorzugt mehr als 1 m²/g, besonders bevorzugt 1 bis 400 m²/g, insbesondere 50 bis 250 m²/g.

Beispiele für erfindungsgemäß eingesetzten Feststoffe (B) sind nicht verstärkende Füllstoffe, also Füllstoffe mit einer BET-Oberfläche von bis zu 50 m²/g, wie Quarz, Diatomeenerde, gemahlener Kalkstein, gefälltes Calciumcarbonat, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Gips, Siliciumnitrid, Siliciumcarbid, Bornitrid, Glas- und Kunststoffpulver, wie Polyacrylnitrilpulver, PTFE-Pulver, Fettsäureamide z.B. Ethylenbisstearamid und fein verteilte hydrophobe Polyurethane; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Besonders bevorzugt handelt es sich bei Feststoff (B) um hydrophile oder hydrophobe, pyrogene oder gefällte Kieselsäure und gefällte oder gemahlene Calciumcarbonate, insbesondere um Calciumcarbonate und um pyrogen hergestellte Kieselsäuren.

Falls es sich bei Feststoff (B) um hochdisperse Kieselsäure handelt, dann haben diese eine Schüttdichte von bevorzugt weniger als 1000 g/l (bei 25°C und dem Druck der umgebenden Atmosphäre), besonders bevorzugt weniger als 200 g/l, insbesondere 10 bis 120 g/l.

Vorzugsweise werden im erfindungsgemäßen Verfahren 3 bis 300 Gewichtsteile, besonders bevorzugt 5 bis 200 Gewichtsteile, insbesondere 10 bis 100 Gewichtsteile, Feststoff (B), jeweils bezogen auf jeweils 100 Gewichtsteile Komponete (A), eingesetzt.

Bei den gegebenenfalls im erfindungsgemäßen Verfahren eingesetzten weiteren Bestandteilen kann es sich um beliebige Stoffe handeln, die auch bisher in Mischungen enthaltend Organosiliciumverbindungen und Feststoffe eingesetzt wurden. Art und Menge richten sich dabei nach dem jeweiligen Anwendungsgebiet und sind dem Fachmann bekannt.

Sollen beispielsweise nach dem erfindungsgemäßen Verfahren vernetzbare Massen hergestellt werden, was bevorzugt ist, so können als weitere Bestandteile die darin üblichen Komponenten, wie Vernetzer (C), Katalysatoren (D), Weichmacher (E), Haftvermittler (F) und Additive (G) eingesetzt werden. Bei den vernetzbaren Massen, die nach dem erfindungsgemäßen Verfahren hergestellt werden können, handelt es sich bevorzugt um durch Kondensationsreaktion vernetzbare Massen, durch Additionsreaktion vernetzbaren Massen, peroxidisch vernetzbare Massen sowie strahlungsvernetzbare Massen, besonders bevorzugt um durch Kondensationsreaktion vernetzbare Massen.

Im erfindungsgemäßen Verfahren können als Komponente (C) - falls erwünscht - Vernetzer eingesetzt werden. Dabei kann es sich um beliebige, bisher bekannte Vernetzer mit mindestens drei zur Vernetzung fähigen Resten handeln, wie bevorzugt Silane oder Siloxane mit mindestens drei kondesationsfähigen Resten.

Besonders bevorzugt handelt es sich bei den im erfindungsgemäßen Verfahren gegebenenfalls eingesetzten Vernetzern (C) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Cyanopropyltrimethoxysilan, 3-Cyanopropyltriethoxysilan, 3-(Glycidoxy)propyltriethoxysilan, 1,2-Bis-(trimethoxysilyl)ethan, Cyclohexylaminomethyltriethoxysilan, 4-(Triethoxysilylmethyl)tetrahydro-1,4-oxazin, 1,2-Bis(triethoxysilyl)ethan, Methyltris(methylethylketoximo)silan, Vinyltris-(methylethylketoximo)silan, Tetrakis-(methylethylketoximo)silan, Methyltriacetoxysilan, Ethyltriacetoxysilan, Vinyltriacetoxysilan, Dimethyldiacetoxysilan, Methylvinyldiacetoxysilan sowie Teilhydrolysate der genannten Organosiliciumverbindungen, wie z.B. Hexaethoxydisiloxan, die ggf. auch durch Cohydrolyse, wie z.B. durch Cohydrolyse von Methyltrimethoxysilan und Dimethyldimethoxysilan, dargestellt werden können.

Insbesondere handelt es sich bei den erfindungsgemäß gegebenenfalls eingesetzten Vernetzern (C) um Tetraethoxysilan, Tetrapropoxysilan, Methyltriethoxysilan, Vinyltriethoxysilan, Phenyltrimethoxysilan, 1,2-Bis(trimethoxysilyl)ethan, 1,2-Bis(triethoxysilyl)ethan, Cyclohexylaminomethyltriethoxysilan, 4-(Triethoxysilylmethyl)tetrahydro-1,4-oxazin, Methyltriacetoxysilan, Ethyltriacetoxysilan, Vinyltriacetoxysilan sowie deren Teilhydrolysate, insbesondere um Methyltrimethoxysilan, Vinyltrimethoxysilan, Methyltriethoxysilan, Vinyltriethoxysilan, Methyltriacetoxysilan, Ethyltriacetoxysilan, Vinyltriacetoxysilan sowie deren Teilhydrolysate.

Handelt es sich bei den im erfindungsgemäßen Verfahren gegebenenfalls eingesetzten Vernetzern (C) um Teilhydrolysate von Silanen, so sind solche mit bis zu 10 Siliciumatomen bevorzugt.

Obwohl nicht explizit erwähnt, können die gegebenenfalls eingesetzten Vernetzer (C) herstellungsbedingt auch einen geringen Anteil von Hydroxylgruppen, bevorzugt bis maximal 5 % aller Sigebundenen Reste, aufweisen.

Die im erfindungsgemäßen Verfahren gegebenenfalls eingesetzten Vernetzer (C) sind handelsübliche Produkte bzw. können nach in der Siliciumchemie bekannten Verfahren hergestellt werden.

Falls im erfindungsgemäßen Verfahren Vernetzer (C) eingesetzt werden, handelt es sich um Mengen von vorzugsweise 0,01 bis 20 Gewichtsteilen, besonders bevorzugt 0,5 bis 10 Gewichtsteilen, insbesondere 3 bis 8 Gewichtsteilen, jeweils bezogen auf 100 Gewichtsteile Komponente (A). Bevorzugt wird Vernetzer (C) eingesetzt.

Beispiele für gegebenenfalls eingesetzte Katalysatoren (D) sind organische Verbindungen von Zinn, Zink, Zirkonium, Titan und Aluminium. Bevorzugt unter diesen Kondensationskatalysatoren sind Butyltitanate und organische Zinnverbindungen, wie Di-n-butylzinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung ≡SiOSn≡ bzw. durch SnC-gebundene, einwertige organische Reste abgesättigt sind.

Falls erfindungsgemäß Katalysatoren (D) eingesetzt werden, handelt es sich um Mengen von bevorzugt 0,0001 bis 5 Gewichtsteilen, besonders bevorzugt 0,001 bis 2 Gewichtsteilen, jeweils bezogen auf 100 Gewichtsteile der vernetzbaren Masse.

Beispiele für gegebenenfalls eingesetzten Weichmacher (E) sind bei Raumtemperatur flüssige, durch Trimethylsiloxygruppen endblockierte Dimethylpolysiloxane, insbesondere mit Viskositäten bei 25°C im Bereich zwischen 10 und 1000 mPas, sowie hochsiedende Kohlenwasserstoffe, wie Dialkylbenzole, Dialkylnaphthaline oder Mineralöle bestehend aus naphthenischen und paraffinischen Einheiten, Polyglykole, insbesondere Polypropylenglykole, die gegebenenfalls substituiert sein können, hochsiedende Ester, wie z.B Phthalate, Zitronensäureester oder Diester von Dicarbonsäuren, flüssige Polyester oder Methacrylate sowie Alkylsulfonsäureester.

Falls im erfindungsgemäßen Verfahren Weichmacher (E) eingesetzt werden, handelt es sich um Mengen von vorzugsweise 1 bis 50 Gewichtsteilen, besonders bevorzugt 5 bis 35 Gewichtsteilen, insbesondere 5 bis 25 Gewichtsteilen, jeweils bezogen auf 100 Gewichtsteile der vernetzbaren Masse. Bevorzugt werden Weichmacher (E) eingesetzt.

Beispiele für die im erfindungsgemäßen Verfahren gegebenenfalls eingesetzten Haftvermittler (F) sind Silane und Organopolysiloxane mit funktionellen Gruppen, wie beispielsweise solche mit Glycidoxypropyl-, Amino- oder Methacryloxypropylresten sowie Tetraalkoxysilane und T- oder Q-Gruppen enthaltende Siloxane, die ggf. Alkoxygruppen aufweisen können. Falls jedoch bereits eine andere Komponente, wie etwa Komponente (A) oder (C), die genannten funktionellen Gruppen aufweist, kann auf einen Zusatz von Haftvermittler verzichtet werden.

Falls im erfindungsgemäßen Verfahren Haftvermittler (F) eingesetzt werden, handelt es sich um Mengen von vorzugsweise 0,001 bis 10 Gewichtsteilen, besonders bevorzugt 0,01 bis 5 Gewichtsteilen, insbesondere 0,1 bis 5 Gewichtsteilen, jeweils bezogen auf 100 Gewichtsteile der vernetzbaren Masse.

Beispiele für gegebenenfalls eingesetzte Additive (H) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Polyether und gehärtetes Rhizinusöl, und organische Lösungsmittel, wie Alkylaromaten, Stabilisatoren wie Phosphorsäureester, Phosphonsäuren, Biocide wie Fungicide, Bactericide, Acarizide, Dispergierhilfsmittel und Modulregler wie Polydimethylsiloxane mit einer OH-Endgruppe.

Die im erfindungsgemäßen Verfahren einzusetzende Menge an Komponente (H) richtet sich nach der Art des Additives und ist dem Fachmann bekannt.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Kennzeichnend für das erfindungsgemäße kontinuierliche Verfahren zum Vermischen von flüssiger Organosiliciumverbindung (A) mit mindestens einem Feststoff (B) ist, dass zunächst die Benetzung des Feststoffs mit der Flüssigkeit sowohl sehr schnell als auch bei geringer mechanischer Beanspruchung des Mischgutes erfolgt. Anschließend kann das Mischgut je nach Anforderung der Mischaufgabe gezielt unterschiedlich stark mechanisch beansprucht werden. Dabei wird der Grad der mechanischen Beanspruchung nach der Benetzung gezielt durch Anpassung der Drehzahl der Mischwellen und der Verweilzeit des Mischgutes im Mischaggregat gesteuert, wobei hohe Drehzahlen und ein großer Füllstand bei gegebenem Mischaggregat und gegebener Rezeptur eine stärkere mechanische Beanspruchung bewirken. Somit ist es möglich, dass die gesamte Mischaufgabe sehr schnell und mit gezielt einstellbarer mechanischer Belastung in einem einzigen Prozessschritt durchgeführt werden kann.

Bevorzugt wird der Feststoff im Mischaggregat mit Flüssigkeit so weit vermischt, dass bei visueller Beurteilung der Mischqualität keine sichtbar unbenetzten Füllstoffanteile vorhanden sind.

Das im erfindungsgemäßen Verfahren eingesetzte Mischaggregat weist ein Gehäuse, dessen Innenwandung den Mischraum umschließt, und mindestens ein darin angeordnetes, sich drehendes Mischorgan auf. Unter einem drehenden Mischorgan ist zu verstehen, dass sich entweder das Mischorgan selbst dreht oder aber das Gehäuse oder beides, wobei das sich drehende Mischorgan bei feststehendem Gehäuse bevorzugt ist.

Bevorzugt sind Mischaggregate mit mehreren Mischorganen, insbesondere mit zwei Mischorganen.

Das Mischorgan besteht mindestens aus einer rotierenden Mischwelle und bevorzugt aus mehreren darauf angeordneten Mischelementen. Dabei ist der Quotient aus Länge der Mischwelle im Mischraum zum Durchmesser des maximalen Rotationsquerschnitts des gesamten Mischorgans größer als 1, besonders bevorzugt 1,5 bis 30, insbesondere 2 bis 10. Außerdem ist die Mischwelle bevorzugt mindestens so lang wie der Mischraum. Der Bereich entlang der Mischwelle, in dem Mischelemente angeordnet sind, stellt die Mischstrecke dar. Bevorzugt ist die Mischstrecke so lang wie der Mischraum.

Bei dem erfindungsgemäßen Verfahren ist das Verhältnis von Länge der Mischstrecke zum Durchmesser des maximalen Rotationsquerschnitts des Mischorgans größer als 2:1, besonders bevorzugt ist es 3:1 bis 30:1.

Die Mischzone ist der von den drehenden Mischorganen überstrichene Raum, wobei auch Bereiche mit einbezogen sind, in denen das Mischgut durch die Drehbewegung des Mischorgans und durch die Schwerkraft hervorgerufenen laminaren und turbulenten Strömungen unterworfen ist.

Der Mischraum ist mit mindestens einer Einlassöffnung für die Ausgangskomponenten und mindestens einer Auslassöffnung für das Mischgut ausgerüstet. Die Einlassöffnungen befinden sich bevorzugt am Anfang der Mischstrecke, die durch die Benetzung des Feststoffs (B) gekennzeichnet ist. Bezogen auf die Förderrichtung des Mischgutes vom Anfang der Mischstrecke bis zum Ende ist die Auslassöffnung für das Mischgut bevorzugt am Ende der Mischstrecke angeordnet.

Die Förderung des Mischgutes entlang der Mischstrecke kann auf 2 verschiedene Arten erfolgen, die sich gegenseitig ergänzen können.

Das Mischgut kann zum Beispiel durch einen höheren Druck an der Einlassöffnung als an der Auslassöffnung durch den Mischraum gedrückt werden. Dies ist allerdings nicht bevorzugt, denn es besteht dann die Gefahr des Durchbrechens von nicht vollständig benetztem Mischgut.

Bevorzugt kommt es zu einer Förderung des Mischgutes durch die Mischelemente, die immer eine gewisse Förderwirkung aufweisen, oder durch zusätzliche Förderelemente.

Das Mischgut wird zusätzlich zur Wirkung der Mischelemente durch den Einfluss der Schwerkraft von der Einlassöffnung in Richtung Auslassöffnung gefördert bedingt durch die Schrägstellung der Mischwelle.

Bei dem erfindungsgemäßen Verfahren wird der Förderprozess des Mischguts jedoch wesentlich durch die erfindungsgemäße Schrägstellung der Mischwelle verstärkt. Dadurch gelangen zum Beispiel die mit der Drehung der Mischorgane nach oben mitgeführten Organosiliciumverbindung (A), dem bevorzugt verwendeten pulverförmigen, insbesondere fluidisierbaren Feststoff (B) und ggf. weiteren Komponenten beim Fall nach unten immer ein wenig in Richtung Auslassöffnung. Weiterhin wird das Mischgut beispielsweise bei jedem Zusammentreffen von Mischelementen stärker in Richtung Auslassöffnung gedrängt als in Richtung der Einlassöffnung, denn bei der Förderung des Mischguts in Richtung der Einlassöffnung muss die Schwerkraft überwunden werden.

Bei dem erfindungsgemäßen Verfahren weist mindestens eine der Mischwellen zur Horizontalen einen Winkel von 10 bis 90 Grad, bevorzugt von 20 bis 70 Grad, besonders bevorzugt von 30 bis 60 Grad, auf, bezogen jeweils auf die Einteilung des Viertelkreises zwischen der Horizontalen und der Vertikalen in 90 Grad, wobei bevorzugt alle Mischwellen diese Winkel zur Horizontalen aufweisen.

Diese erfindungsgemäße Anordnung gewährleistet eine wesentlich effektivere Vermischung der Ausgangskomponenten durch eine verstärkte Förderung des unbenetzten, bevorzugt pulverförmigen, insbesondere fluidisierbaren Feststoffs entlang der Mischwelle in Richtung Auslassöffnung als die bisher bekannten horizontalen Ausrichtungen der Mischwellen bei der Herstellung von RTV1-Dichtmassen.

Bei dem erfindungsgemäßen Verfahren beträgt die Umfangsgeschwindigkeit der Mischorgane, insbesondere zur Begrenzung der mechanischen Beanspruchung des Mischguts, bevorzugt 0,1 bis 10 m/s, besonders bevorzugt 0,1 bis 5 m/s, insbesondere 0,2 bis 2,0 m/s. Als Umfangsgeschwindigkeit im Sinne der vorliegenden Erfindung soll die Geschwindigkeit am äußeren Umfang der Mischorgane verstanden werden. An dieser Stelle findet üblicherweise die stärkste mechanische Beanspruchung des Mischguts statt, wobei die mechanische Beanspruchung des Mischguts hauptsächlich durch Stauchungen und Scherungen verursacht wird.

Ein weiteres Maß für die Stärke der mechanischen Beanspruchung des Mischguts ist die Erwärmung des Mischguts durch den Mischprozess. Bei dem erfindungsgemäßen Verfahren beträgt die Erwärmung des Mischguts durch die mechanische Beanspruchung bevorzugt maximal 30 K, besonders bevorzugt 0 bis 20 K. Zur Erfüllung spezieller Mischaufgaben kann die Verwendung von gekühlten oder beheizten Mischaggregaten bei dem erfindungsgemäßen Verfahren von Vorteil sein. Falls das erfindungsgemäß verwendete Mischaggregat gekühlt wird, wie z.B. bei Verwendung von Doppelmantelgeräten, beträgt der bevorzugte Temperaturanstieg -10 bis 20 K, besonders bevorzugt 0 bis 15 K, insbesondere 0 bis 10 K. So können bei dem erfindungsgemäßen Verfahren z.B. gezielt Bedingungen geschaffen werden, welche die Änderungen von Aggregatzuständen ausnutzen oder verhindern, wie etwa die Verflüssigung oder Verdampfung von Dispergierhilfsmitteln, was aber nicht bevorzugt ist.

Falls gewünscht, kann der Mischraum im Vergleich zum Druck der umgebenden Atmosphäre einen Unter- oder einen Überdruck aufweisen, wobei das Mischen bei Unterdruck bevorzugt ist, beispielsweise bei einem Druck von 50 bis 200 hPa.

Bevorzugt findet das erfindungsgemäße Verfahren bei Temperaturen von -10 bis 250°C statt, besonders bevorzugt bei 10 bis 60°C, insbesondere bei Raumtemperatur oder bei Bedingungen, wie sie sich beim Vermischen der Komponenten ergeben.

Beim Heizen, was nicht bevorzugt ist, und beim Kühlen, was bevorzugt ist, können beispielsweise das Gehäuse des Mischaggregats als auch Teile des Mischorgans, wie zum Beispiel gekühlte hohle Mischwellen, oder zusätzliche Einbauten, wie zum Beispiel Kühlschlangen, zur Temperierung des Mischgutes genutzt werden.

Falls erwünscht, können bei dem erfindungsgemäßen Verfahren auch verschiedene Bereiche des Mischraums mit jeweils verschiedenen verfahrenstechnischen Parametern betrieben werden.

Bei dem erfindungsgemäßen Verfahren ist die Differenz der Volumina von Mischraum und Mischzone, also der sog. Totraum, möglichst klein, wobei der Mischraum beliebige Querschnitte aufweisen kann. Idealerweise ist dabei die Geometrie der Gehäuseinnenwandung an die Geometrie der Mischzone angepasst.

Beim Vorliegen nur einer Mischwelle ist der Mischraum bevorzugt rotationssymmetrisch ausgebildet, denn dadurch können am leichtesten ungewünschte Produktanhaftungen und Toträume im Mischraum vermieden werden. Besonders bevorzugt ist der Mischraum zylindrisch oder konisch, insbesondere zylinderförmig.

Beim Vorliegen mehrerer Mischwellen besteht der Mischraum aus mehreren rotationssymmetrischen Mischräumen, die sich auch teilweise überlappen können, was besonders bevorzugt ist.

Bevorzugt weist der Mischraum ein Volumen von 0,001 bis 20 m³ auf, besonders bevorzugt 0,01 bis 2 m³.

Bei dem erfindungsgemäßen Verfahren sind auf der sich drehenden Mischwelle Mischelemente angeordnet, die insbesondere ein Vermischen von Feststoff und Flüssigkeit bewirken. Wenn mehrere Mischwellen angeordnet sind, was bevorzugt ist, wobei zwei Mischwellen ganz besonders bevorzugt sind, ergeben sich mehrere Mischzonen. Bevorzugt tangieren oder überlappen sich diese Mischzonen, wobei sie sich besonders bevorzugt überlappen.

Bevorzugt sind die Mischwellen in sich gerade und achsparallel zueinander angeordnet, sie können jedoch auch in einem Winkel von bis zu 60 Grad zueinander angeordnet sein.

Beim Vorliegen von mehreren Mischorganen ist der bevorzugte Quotient aus Länge und Durchmesser auf die Länge des längsten Mischorgans und der Durchmesser auf den Durchmesser des jeweils größten Rotationsquerschnitts eines der Mischorgane zu beziehen.

Bei dem erfindungsgemäß eingesetzten Mischaggregat ist der Abstand zwischen rotierenden Mischelementen und Gehäuseinnenwandung möglichst klein, wodurch die Möglichkeiten von Ablagerungen des Mischgutes an der Innenwandung reduziert werden. So wird ein maximaler Abstand von Mischelement und Innenwandung von 10 cm bevorzugt, besonders bevorzugt ein Abstand von maximal 5 cm, wobei der Abstand insbesondere 0,1 bis 2,0 cm beträgt.

Bevorzugt weisen die Mischwellen Längen von 0,5 bis 20 m auf, wobei Längen von 1 bis 10 m besonders bevorzugt sind.

Bevorzugt sind die Mischwellen kompakt ausgebildet, das heißt, sie sind starr und verformen sich unter den Bedingungen des Mischens nicht oder nur unwesentlich. Es können jedoch gezielt beweglich Teile angeordnet werden, die beispielsweise beim Ändern der Drehrichtung eine Reinigung des Mischorgans oder der Innenwandung bewirken.

Es können auch mehrere Mischwellen hintereinander oder nebeneinander so installiert sein, dass sie ringförmig um einen festen Kern herum angeordnet sind. Dabei können die Mischwellen jeweils unabhängig voneinander beliebige Drehgeschwindigkeiten und Drehrichtungen aufweisen. So können sich beispielsweise 2 Mischwellen gegenläufig oder gleichläufig in Bezug aufeinander bewegen.

Falls beim erfindungsgemäßen Verfahren Mischaggregate mit mehreren Mischwellen eingesetzt werden, haben diese bevorzugt eine gleichläufige Bewegung.

Ebenso, wie die beschriebenen Mischelemente auf der Mischwelle angeordnet sein können, ist auch die Anordnung von Mischelementen an der Innenwandung des Mischaggregates möglich, aber nicht bevorzugt. Ist nur eine Mischorgan vorhanden, ist die zusätzliche Anordnung von Mischelementen an der Innenwandung bevorzugt.

Die Drehzahlen der Mischwellen können beliebig gewählt werden, bevorzugt sind Drehzahlen von 10 bis 200 Umdrehungen je Minute, besonders bevorzugt von 10 bis 150 Umdrehungen je Minute, insbesondere von 30 bis 120 Umdrehungen je Minute

Falls erwünscht, können die Mischwellen auch in beliebiger Frequenz zusätzliche kurze Bewegungen in Richtung ihrer Längsachse durchführen, um beispielsweise Produktanhaftungen abzustoßen oder um besondere Mischeffekte zu bewirken, was aber nicht bevorzugt ist.

Weiterhin kann bei dem erfindungsgemäßen Verfahren die Mischwelle ohne Kontakt zur Innenwandung frei und ohne Lagerung in den Mischraum ragen oder an beliebigen Stellen des Mischaggregates gelagert werden, wie zum Beispiel im oberen Bereich des Mischraumes, im unteren Bereich des Mischraumes oder in der Mitte.

Bei dem erfindungsgemäßen Verfahren können als Mischelemente beliebige und alle bisher bekannten Mischelemente eingesetzt werden. Sie können jede beliebige Form und Größe aufweisen, soweit sie die Drehbewegung der Mischwelle nicht behindern. So können die Mischelemente innerhalb eines Mischorgans auch unterschiedliche Form und Größe haben.

Die Mischelemente können beliebig auf der Mischwelle und an der Innenwandung des Gehäuses angeordnete Aufbauten sein, solangesie die Drehbewegung nicht behindern. Die Mischelemente sind auf den Mischwellen oder der Innenwandung so angeordnet bzw. werden so betrieben, dass sich bei den durch die Drehbewegung der Mischorgane begegnenden Mischelementen ein minimaler Abstand von nicht mehr als 20 cm gegeben ist, wobei ein Abstand von nicht mehr als 10 cm bevorzugt und ein Abstand von 0,1 bis 5 cm ganz besonders bevorzugt ist.

Bei dem erfindungsgemäßen Verfahren wird die Form der Mischelemente und deren Anordnung auf der Welle und/oder Innenwand bevorzugt so gewählt, dass die Mischelemente das Mischgut gezielt entlang der Mischwelle fördern. Die Förderwirkung kann z.B. dadurch erreicht werden, dass die Mischelemente als Teile einer oder mehrerer Förderschnecken angeordnet sind. So wird beispielsweise die vordere Kante in Bezug auf die Drehrichtung zur Einlassöffnung hin angeordnet und die hintere Kante zur Auslassöffnung hin angeordnet, wobei die flächenförmigen Mischelemente eben oder gebogen sein können. Bevorzugte Beispiele sind scheiben- oder schneckenförmige Ausführungen, die in der Fläche unterbrochen sein können.

Weiterhin bevorzugt sind T-förmige Mischelemente auf den Mischwellen angeordnet, wobei ganz besonders T-förmige Ausführungsformen bevorzugt sind, die sich gegenseitig auskämmen, wie sie in DE-C-23 49 106, die zum Offenbarungsgehalt der vorliegenden Erfindung zu zählen ist, beschrieben sind. Besonders bevorzugt haben die T-förmigen Mischelemente auf einer Welle die gleiche Größe, wodurch das Mischorgan insgesamt zylinderförmig gestaltet ist. Diese T-förmigen Mischelemente sind bevorzugt schneckenförmig auf der Mischwelle angeordnet.

Zusätzlich zu den die Förderung des Mischguts bewirkenden Mischelementen können erfindungsgemäß auch solche angeordnet sein, welche die Bewegung des Mischgutes beliebig verändern, um beispielsweise besondere Mischeffekte zu erzielen. So können z.B. Teilmengen des Mischgutes kurze Strecken gezielt entgegengesetzt zur generellen Förderrichtung transportiert werden.

Möglich und bevorzugt ist auch der Einbau von speziellen Abstreifern, die streifenförmig gestaltet sind und sich in geringem Abstand zur Innenwandung bewegen, wodurch das Mischgut von der Innenwandung intensiv abgetrennt wird. Bevorzugt sind sie starr auf der Mischwelle angeordnet.

Die im erfindungsgemäßen Verfahren eingesetzten Mischorgane weisen Durchmesser des maximalen Rotationsquerschnitts von bevorzugt 0,1 bis 5 m, besonders bevorzugt von 0,2 bis 2 m, insbesondere 0,5 bis 1 m, auf.

Bei dem erfindungsgemäßen Verfahren können die Einlassöffnungen am Mischraum für die zu mischenden Komponenten beliebig gestaltet werden. So ist es möglich, alle Komponenten durch eine Einlassöffnung zuzugeben, was jedoch nicht bevorzugt ist. Bevorzugt sind mindestens zwei Einlassöffnungen vorhanden. Falls zwei Einlassöffnungen vorhanden sind, dann ist besonders bevorzugt die Einlassöffnung für den Feststoff (B) vor der Öffnung für die Organosiliciumverbindung (A) angeordnet. Falls weitere Komponenten (C) bis (H) zugegeben werden sollen, können diese entweder durch eine der beiden bereits beschriebenen Einlassöffnungen oder durch separate Öffnungen dosiert werden, die sich dann bevorzugt nach den Einlassöffnungen für Organosiliciumverbindung (A) und Feststoff (B) befinden. Es ist ebenfalls möglich, einige oder alle der Komponenten (C) bis (H) mit der Organosiliciumverbindung (A) vorvermischt zu dosieren, was bevorzugt ist.

Bevorzugt befindet sich die Einlassöffnung für den Feststoff (B) und insbesondere die Einlassöffnung für die Organosiliciumverbindung (A) direkt über einer Mischwelle oder, was besonders bevorzugt ist, direkt über dem Überlappungsbereich von zwei Mischzonen.

Die Einlassöffnung für Organosiliciumverbindung (A) kann aber auch im Bereich des Umfangs der Innenwandung angeordnet sein, was allerdings nicht bevorzugt ist.

Während flüssige Komponenten bei dem erfindungsgemäßen Verfahren bevorzugt mit Pumpen in den Mischraum gefördert werden, gelangen Feststoffe bevorzugt durch freien Fall in den Mischraum.

Besonders bevorzugt ist die Einlassöffnung für den Feststoff beispielsweise beim Arbeiten unter atmosphärischem Druck, so angeordnet und gestaltet, dass mit dem Feststoff eingeschleppte Luft oder Inertgase leicht durch die Einlassöffnung selbst oder durch eine weitere Öffnung entweichen können. Dabei ist die Öffnung für das Entweichen von Luft oder Inertgasen in Form eines Schachtes bevorzugt weit nach oben geführt, damit mitgerissene Feststoffteilchen wieder absinken können. Zusätzlich kann diese Öffnung mit Filtereinrichtungen verschlossen werden, damit die Feststoffteilchen nicht an die Umwelt abgegeben werden.

Soll das erfindungsgemäße Verfahren im Vakuum durchgeführt werden, dann kann die mit den Ausgangskomponenten mitgeschleppte Luft oder ein Inertgas durch eine zusätzlich Vakuumöffnung entfernt werden, die bevorzugt in Form eines an sich bekannten Domes gestaltet ist. Diese Vakuumöffnung kann an beliebiger Stelle angeordnet sein. Bevorzugt ist sie am Beginn der Mischstrecke im oberen Bereich des Mischraumes angeordnet.

Eine bevorzugte Möglichkeit, den Mischprozess bei geringen Drücken durchzuführen, besteht darin, dass der Feststoff (B) bereits vor der Dosierung in den Mischraum unter verminderten Druck gesetzt wird, wobei in diesem Fall bevorzugt eine dem Fachmann bekannte Gaspendelleitung zwischen Feststoffvorlage und Mischaggregat installiert ist.

Zusätzlich können an jeder beliebigen Stelle des Mischaggregates Dosieröffnungen für Teilmengen von Feststoff, Flüssigkeit oder für beliebige weitere Mischungsbestandteile angeordnet sein.

Bei den im erfindungsgemäßen Verfahren eingesetzten Mischaggregaten können die Auslassöffnungen in beliebiger Form und Größe an beliebigen Stellen des Mischraumes am Ende der Mischstrecke angeordnet sein.

Die Auslassöffnung kann beispielsweise am hinteren Ende der Mischstrecke an der Stirnseite des Mischraumes angebracht sein, was bevorzugt ist. Sie kann aber auch tangential am hinteren Ende der Mischstrecke im Umfang des Gehäuses angeordnet sein.

Im Bereich der Auslassöffnung befindet sich bevorzugt eine Austragseinrichtung, wie z.B. eine Austragsdoppelschnecke oder eine Zahnradpumpe, die das Mischgut zur weiteren Verarbeitung fördert. Diese weitere Verarbeitung kann zum Beispiel Entgasungsschritte, Einarbeitung weiterer Mischungsbestandteile wie Katalysatoren, Pigmente oder Haftvermittler, Abkühlung des Mischguts oder Abfüllung in beliebige Gebinde beinhalten.

Bevorzugt wird bei der erfindungsgemäßen Herstellung von durch Kondensationsreaktion vernetzbaren Massen diese direkt nach dem Austrag aus dem Mischaggregat in feuchtigkeitsdichten Behältern gespeichert oder in feuchtigkeitsdichte Gebinde abgefüllt. Die direkte Abfüllung ohne Zwischenspeicherung setzt voraus, dass die vernetzbare Masse alle gewünschten Mischungsbestandteile bereits enthält und eine Abkühlung des Mischgutes nicht notwendig ist, weil die Mischguttemperatur z.B. unter 45°C ist. Bei allen Prozessschritten kann unter Ausschluss von Luftfeuchtigkeit gearbeitet werden.

Sollen in die nach dem erfindungsgemäßen Verfahren erhaltene vernetzbare Masse noch weitere Bestandteile, wie Farbpasten oder Fungizide eingemischt werden, dann werden dazu bevorzugt keine drehenden, insbesondere keine schnell drehenden, Mischorgane benutzt, sondern beispielsweise statische Mischer.

Das erfindungsgemäße Verfahren hat den Vorteil, dass auf einfache Art und Weise, kontinuierlich homogene Mischungen hergestellt werden können.

Das erfindungsgemäße Verfahren hat den Vorteil, dass ein Vermischen von flüssigen Organosilciumverbindungen mit pulverförmigen Feststoffen schonend und bei sehr geringer mechanischer Beanspruchung des Mischguts durchgeführt werden kann.

Ferner hat das erfindungsgemäße Verfahren den Vorteil, dass pulverförmige Feststoffe mit geringer Schüttdichte sehr schnell benetzt werden.

Das erfindungsgemäße Verfahren hat den Vorteil, dass niedermodulige Dichtmassen mit sehr gutem "body" herstellbar sind.

Des Weiteren hat das erfindungsgemäße Verfahren den Vorteil, dass die gesamte RTV1-Herstellung in einem Aggregat möglich ist ohne zusätzliche Prozessschritte.

Das erfindungsgemäße Verfahren hat den Vorteil, dass eine leichte Entfernung gasförmiger Komponenten möglich ist.

Das erfindungsgemäße Verfahren hat den Vorteil, dass nur eine minimale Instandhaltung und Reinigung des Mischaggregats notwendig ist.

Das erfindungsgemäße Verfahren hat den Vorteil, dass es aufgrund der geringen Produkterwärmung, produktschonend und wirtschaftlich durchgeführt werden kann, wobei praktisch keine örtliche Überhitzung des Mischgutes stattfindet.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt. Des weiteren beziehen sich alle Angaben von Teilen und Prozentsätzen, soweit nichts anderes angegeben ist, auf das Gewicht.

Die Shore-A-Härte wird nach DIN (Deutsche Industrie Norm) 53505-87 bestimmt.

Die Reißfestigkeit wird nach DIN 53504-85 S2 bestimmt.

Die Reißdehnung wird nach DIN 53504-85 S2 bestimmt.

Der Modul ist der Spannungswert bei 100 % Dehnung.

Zur quantitativen Erfassung des "Body" von Dichtmassen wurde eine Messmethode entwickelt, die es gestattet, relative Unterschiede zwischen verschieden hergestellten Massen und unterschiedlichen Rezepturen zu messen. Dazu werden die Proben vor der Messung 2 h bei 23°C temperiert. Ein 50-ml-PE-Becher mit einem Durchmesser von 50 mm wird luftblasenfrei mit der zu prüfenden Masse überfüllt. Um eine glatte Oberfläche zu erhalten, wird die Oberfläche der Dichtmasse mit dem Rand bündig glattgestrichen. In diese so vorbereitete Probe wird unverzüglich ein Probekörper, der die Gestalt einer Halbkugel mit 25 mm Durchmesser und 5 mm zylindrischer Verlängerung hat, mit einer Zugprüfmaschine Typ1425 der Fa. ZWICK (200N Messdose) mit 60 mm/min 20 mm tief in die Probe hineingedrückt. Die gemessene Maximalkraft ist die Eindringkraft. Je größer die Eindringkraft ist, desto besser ist der "body".

### Beispiel 1

### Herstellung einer neutralvernetzenden RTV1-Dichtmasse

Ein Mischaggregat, welches einen Mischraum von ca. 30 l aufwies, war mit 2 Mischwellen ausgerüstet, auf denen sich T-förmige Mischelemente gleicher Größe befanden, die sich gegenseitig auskämmten. Der Quotient aus Länge und Durchmesser des Mischorganes betrug ca. 3. Die einzelnen Mischelemente waren auf der Mischwelle in Reihen angeordnet, welche die Form einer Schraubenlinie mit 4 % positiver Steigung aufwiesen. Auf einer Welle waren 5 solcher Reihen angeordnet und auf der anderen 4. Daraus ergab sich, dass die Drehzahlen der beiden Wellen in einem Verhältnis von 4:5 betrieben werden mussten. Im weiteren wird nur die jeweils höhere Drehzahl angegeben. Der Mischraum hatte die Form von zwei sich in Form einer liegenden acht überlappenden Zylindern. Jeder dieser Zylinder hatte einen Durchmesser von ca. 200 mm. Mischaggregate dieser Art sind z.B. käuflich erhältlich bei der Firma LIST, Arisdorf, Schweiz. Das Gerät war mit einem Doppelmantel zur Kühlung oder Heizung ausgerüstet, welcher jedoch nicht benutzt wurde. An der Stirnseite am Ende des Mischraumes befand sich ein Schlitz von ca. 100x20 mm. Daran anschließend befand sich eine Doppelschnecke für die weitere Förderung des gemischten Produktes zur Abfüllung in feuchtigkeitsdichte PE-Kartuschen.

Dieses Aggregat wurde in einem Winkel von 30 Grad zur Horizontalen aufgebaut, wobei sich eine durch die Schwerkraft verstärkte Förderichtung des Mischguts nach unten zum Ende der Mischwellen hin ergab.

Am oberen Ende der Mischwelle befand sich über dem Überlappungsbereich der Mischzonen eine Öffnung von ca. 150mm Durchmesser, durch welche der Feststoff (B) im freien Fall aus einer Dosierwaage über einen flexiblen Schlauch zugegeben wurde. In einer Entfernung von ca. 30 mm entlang der Mischstrecke unterhalb dieser ersten Einlassöffnung war, ebenfalls über dem Überlappungsbereich der Mischzonen, eine weitere Öffnung von ca. 10 mm Durchmesser angeordnet, durch welche eine Vormischung aller weiteren flüssigen Komponenten zugegeben wurde.

An der Einlassöffnung für den Feststoff (B) herrschte der Druck (P₁) der umgebenden Atmosphäre von 1000 hPa. Die Ausgangsstoffe wurden mehrere Tage bei Raumtemperatur gelagert.

Zunächst wurde eine Mischung von 307 kg eines Polydimethylsiloxangemischs, bei dem die Siloxane mit Dimethoxymethylsilyl- und/oder Dimethoxyvinylsilylgruppen terminiert sind und das Verhältnis von Dimethoxymethylsilyl-Endgruppen zu Dimethoxyvinylsilyl-Endgruppen in etwa 1:1 ist, mit einer Viskosität von 80 000 mPa·s, 138 kg eines α ,ω-Bis-trimethylsiloxypolydimethylsiloxans mit einer Viskosität von 1000 mPas, 14 kg Methyltrimethoxysilan, 2 kg Vinyltrimethoxysilan, 9 kg eines Haftvermittlers, der hergestellt wird durch die Umsetzung von 1 Teil Aminopropyltriethoxysilan mit 1 Teil Methyltriethoxysilan-Hydrolysat mit einem Ethoxygehalt von 37 %, 3,5 kg Aminopropyltrimethoxysilan, 1,8 g eines Umsetzungsproduktes von Dibutylzinndiacetat mit Tetraethoxysilan im Molverhältnis 1:2, wobei der entstandene Essigsäureethylester abdestilliert wurde, und 1,1 kg einer 50 Ma%igen Lösung von Octylphosphonsäure in Methyltrimethoxysilan hergestellt.

Von dieser Mischung wurden 50 kg/h in das oben beschriebene Aggregat dosiert. Gleichzeitig wurden 4,8 kg/h hochdisperse Kieselsäure mit einer BET-Oberfläche von 150 m²/g (käuflich erhältlich unter der Bezeichnung HDK® V15 bei der Wacker Chemie AG, D-München) durch die oben beschriebene Öffnung für den Feststoff (B) dosiert. Die Komponenten wurden bei einer Drehzahl von 40 min⁻¹ gemischt.

Das Aggregat wurde zunächst für 16,5 min ohne Austrag betriebene, wobei sich ein Instand von ca. 15 kg ergab. Danach wurde durch Inbetriebnahme der Austragsschnecke mit dem Austrag von 54,8 kg/h des gemischten Produktes begonnen.

Nach einer Stunde Laufzeit des Versuchs wurden Proben in handelsübliche Polyethylenkartuschen gefüllt. Zu diesem Zeitpunkt betrug die Temperatur am Ende der Mischstrecke 26°C.

Das Produkt wurde vor der Beurteilung durch Anlegen von Vakuum von eingeschlossenen Gasblasen befreit. Es wurde eine homogene Mischung erhalten, die auch bei Lagerung über mehrere Monate in einer 300 ml-PE-Kartusche homogen bleibt. Es bilden sich keine Inhomogenitäten durch lokale Vernetzung der Mischung.

Zur Beurteilung des Aussehens wurden die Masse auf eine Glasplatte in einer ca. 0,1 mm dicken Schicht aufgetragen. Die Masse erschien homogen und glatt.
Eindringkraft 4,41 N
Spannung bei 100 % Dehnung 0,29 MPa
Zugfestigkeit 1,1 MPa
Reißdehnung 560 %
Härte 16 ShA

### Beispiel 2

Der Versuch des Beispiels 1 wurde wiederholt, mit dem Unterschied, dass während der Dosierung der Komponenten der Mischraum und die Zugabevorrichtung für die hochdisperse Kieselsäure unter ein Vakuum von ca. 200 hPa gesetzt wurden.

Im Unterschied zu Beispiel 1 wurde am Austrag ein von Gasblasen freies Produkt erhalten, was somit ohne weitere Prozessschritte verwendbar war.

Die Eigenschaften des so erhaltenen Produktes:
Aussehen: glatt, homogen
Eindringkraft 4,2 N
Spannung bei 100 % Dehnung 0,29 MPa
Zugfestigkeit 1,1 MPa
Reißdehnung 500 %
Härte 16 ShA

### Vergleichsbeispiel 3

Der Versuch des Beispiels 1 wurde wiederholt. Im Unterschied zu diesem Versuch hatten die Mischwellen des Mischaggregates eine Neigung von 0° zur Horizontalen.

Zunächst wurde festgestellt, dass bei den Mischbedingungen des Beispiels 1 die Austragsmenge an gemischtem Produkt deutlich geringer war als die Summe der dosierten Mengen der Ausgangsstoffe, was zum stetigen Anfüllen des Mischaggregates führte. Um das zu verhindern, wurde die Drehzahl auf 60 min⁻¹ erhöht. Danach konnte eine der zudosierten Mengen äquivalente Menge an gemischtem Produkt ausgetragen werden. Nach ca. 1 h wurden Proben abgenommen und begutachtet, wobei festgestellt wurde, dass die Mischung noch sehr inhomogen war. Es waren deutliche Inhomogenitäten sichtbar. Die Temperatur am Ende der Mischstrecke betrugt 35°C.
Aussehen: inhomogen, rau
Eindringkraft 3,39 N
Spannung bei 100 % Dehnung 0,29 MPa
Zugfestigkeit 0,7 MPa
Reißdehnung 400 %
Härte 14 ShA

## Patentansprüche

1. Verfahren zur kontinuierlichen Herstellung von Mischungen enthaltend Organosiliciumverbindung (A) und Feststoff (B) sowie gegebenenfalls weitere Komponenten in einem Mischaggregat, das ein Gehäuse, dessen Innenwandung den Mischraum umschließt und mindestens ein darin angeordnetes, sich drehendes Mischorgan aufweist, wobei das Mischorgan aus mindestens einer rotierenden Mischwelle besteht, wobei mindestens eine Mischwelle einen Neigungswinkel zur Horizontalen von mehr als 10 Grad aufweist und die Einlassöffnung für den Feststoff (B) höher angeordnet ist als die Auslassöffnung, **dadurch gekennzeichnet, dass** der Quotient aus Länge der Mischwelle im Mischraum zum Durchmesser des maximalen Rotationsquerschnitts des gesamten Mischorgans größer als 1 ist.

2. Verfahren nach Anspruch 1, **dadurch gekennzeichnet, dass** es sich bei den eingesetzten Organosiliciumverbindungen (A) um solche enthaltend mindestens eine Einheit der Formel
RₐY_{b}SiX_{(4-a-b)/2} (I)
handelt, wobei
R gleich oder verschieden sein kann und gegebenenfalls substituierte Kohlenwasserstoffreste bedeutet,
Y gleich oder verschieden sein kann und Hydroxylgruppe oder hydrolysierbare Reste bedeutet,
X gleich oder verschieden sein kann und Sauerstoffatom oder einen zweiwertigen organischen Rest bedeutet,
a 0, 1, 2 oder 3 ist und
b 0, 1, 2 oder 3 ist,
mit der Maßgabe, dass die Summe aus a+b kleiner oder gleich 3 ist.

3. Verfahren nach Anspruch 1 oder 2, **dadurch gekennzeichnet, dass** es sich bei Komponente (B) um pulverförmige Feststoffe handelt.

4. Verfahren nach einem oder mehreren der Ansprüche 1 bis 3, **dadurch gekennzeichnet, dass** es sich bei den Mischungen um vernetzbare Massen handelt.

5. Verfahren nach einem oder mehreren der Ansprüche 1 bis 4, **dadurch gekennzeichnet, dass** das Mischaggregat mehrere Mischorgane aufweist.

6. Verfahren nach einem oder mehreren der Ansprüche 1 bis 5, **dadurch gekennzeichnet, dass** mindestens eine der Mischwellen zur Horizontalen einen Winkel von 10 bis 90 Grad aufweist.

7. Verfahren nach einem oder mehreren der Ansprüche 1 bis 6, **dadurch gekennzeichnet, dass** die Erwärmung des Mischguts durch die mechanische Beanspruchung maximal 30 K beträgt.

8. Verfahren nach einem oder mehreren der Ansprüche 1 bis 7, **dadurch gekennzeichnet, dass** der Mischraum zylindrisch oder konisch ist.

9. Verfahren nach einem oder mehreren der Ansprüche 1 bis 8, **dadurch gekennzeichnet, dass** es sich bei den Mischelementen um T-förmige Mischelemente handelt.

10. Verfahren nach einem oder mehreren der Ansprüche 1 bis 9, **dadurch gekennzeichnet, dass** der maximale Abstand von Mischelement und Innenwandung 10 cm beträgt.

## Claims

1. Process for the continuous preparation of mixtures containing organosilicon compound (A) and solid (B) and optionally further components in a mixing unit which has a housing whose inner wall encloses the mixing space, and at least one rotating mixing member arranged therein, wherein the mixing member consists of at least one rotating mixing shaft, wherein at least one mixing shaft makes an angle of inclination with the horizontal of more than 10 degrees and the inlet opening for the solid (B) is arranged higher than the outlet opening, **characterized in that** the quotient of length of the mixing shaft in the mixing space to the diameter of the maximum rotational cross section of the entire mixing member is greater than 1.

2. Process according to Claim 1, **characterized in that** the organosilicon compounds (A) used are those containing at least one unit of the formula
RₐY_{b}SiX_{(4-a-b)/2} (I)
in which
R may be identical or different and is optionally substituted hydrocarbon radicals,
Y may be identical or different and is a hydroxyl group or hydrolyzable radicals,
X may be identical or different and is an oxygen atom or a divalent organic radical,
a is 0, 1, 2 or 3, and
b is 0, 1, 2 or 3,
with the proviso that the sum a+b is less than or equal to 3.

3. Process according to Claim 1 or 2, **characterized in that** component (B) comprises pulverulent solids.

4. Process according to one or more of Claims 1 to 3, **characterized in that** the mixtures are crosslinkable materials.

5. Process according to one or more of Claims 1 to 4, **characterized in that** the mixing unit has a plurality of mixing members.

6. Process according to one or more of Claims 1 to 5, **characterized in that** at least one of the mixing shafts makes an angle of from 10 to 90 degrees with the horizontal.

7. Process according to one or more of Claims 1 to 6, **characterized in that** the heating up of the mixed material by the mechanical loading is not more than 30 K.

8. Process according to one or more of Claims 1 to 7, **characterized in that** the mixing space is cylindrical or conical.

9. Process according to one or more of Claims 1 to 8, **characterized in that** the mixing elements are T-shaped mixing elements.

10. Process according to one or more of Claims 1 to 9, **characterized in that** the maximum distance between mixing element and inner wall is 10 cm.

## Revendications

1. Procédé pour la production continue de mélanges contenant un composé organosilicié (A) et une matière solide (B) ainsi qu'éventuellement d'autres composants dans un appareil de mélange qui comporte une enveloppe, dont la paroi interne entoure la chambre de mélange, et au moins un organe de mélange rotatif disposé dans cette dernière, l'organe de mélange consistant en au moins un arbre de mélange rotatif, au moins un arbre de mélange présentant un angle d'inclinaison par rapport à l'horizontale de plus de 10 degrés et l'orifice d'entrée pour la matière solide (B) étant placé plus haut que l'orifice de sortie, **caractérisé en ce que** le quotient de la longueur de l'arbre de mélange dans la chambre de mélange par le diamètre de la section transversale de rotation maximale de l'organe de mélange dans son ensemble est supérieur à 1.

2. Procédé selon la revendication 1, **caractérisé en ce que** pour ce qui concerne les composés organosiliciés (A) utilisés il s'agit de ceux qui contiennent au moins une unité de formule
RₐY_{b}SiX_{(4-a-b)/2} (I)
dans laquelle
R peut être le même ou différent et représente des radicaux hydrocarbonés éventuellement substitués,
Y peut être le même ou différent et représente le groupe hydroxy ou des radicaux hydrolysables,
X peut être le même ou différent et représente un atome d'oxygène ou un radical organique divalent,
a est 0, 1, 2 ou 3 et
b est 0, 1, 2 ou 3,
étant entendu que la somme de a+b est inférieure ou égale à 3.

3. Procédé selon la revendication 1 ou 2, **caractérisé en ce que** pour ce qui est du composant (B) il s'agit de matières solides pulvérulentes.

4. Procédé selon une ou plusieurs des revendications 1 à 3, **caractérisé en ce que** pour ce qui est des mélanges il s'agit de matières réticulables.

5. Procédé selon une ou plusieurs des revendications 1 à 4, **caractérisé en ce que** l'appareil de mélange comporte plusieurs organes de mélange.

6. Procédé selon une ou plusieurs des revendications 1 à 5, **caractérisé en ce que** ledit au moins un des arbres de mélange présente un angle de 10 à 90 degrés par rapport à l'horizontale.

7. Procédé selon une ou plusieurs des revendications 1 à 6, **caractérisé en ce que** l'échauffement du produit à mélanger, dû à la contrainte mécanique, est au maximum de 30 K.

8. Procédé selon une ou plusieurs des revendications 1 à 7, caractérisé en ce la chambre de mélange est cylindrique ou conique.

9. Procédé selon une ou plusieurs des revendications 1 à 8, **caractérisé en ce que** pour ce qui est des éléments de mélange il s'agit d'éléments de mélange en forme de T.

10. Procédé selon une ou plusieurs des revendications 1 à 9, caractérisé en ce l'écart maximum entre les éléments de mélange et la paroi interne est de 10 cm.
